# EUROPEAN PATENT SPECIFICATION

(11) **EP 2 754 155 B1**
(45) Date of publication and mention of the grant of the patent: **18.07.2018**
(21) Application number: 12829824.7
(22) Date of filing: 07.09.2012
(51) Int. Cl.: G12B 9/02, G12B 9/10, H02B 3/00

(54) **METHOD FOR PROVIDING A NEW INSTRUMENT CASE**
VERFAHREN ZUR BEREITSTELLUNG EINES NEUEN INSTRUMENTENGEHÄUSES
PROCÉDÉ POUR LA FOURNITURE D'UNE NOUVELLE ARMOIRE D'INSTRUMENTATION

(30) Priority: 07.09.2011 US 201161531690 P
(43) Date of publication of application: 16.07.2014
(73) Proprietor: Les Solutions Ferroviaire S&C Inc., Brossard, Québec J4Y 2Z2 (CA)
(72) Inventor: PELLIN, Paul, Notre-Dame-de-l'Ile-Perrot, Québec J7V 8P6 (CA)
(74) Representative: Nony
(86) International application number: PCT/CA2012/050616
(87) International publication number: WO 2013/033844

(56) References cited:
- WO-A1-2011/038493
- WO-A1-2011/038493
- US-A- 5 280 132
- US-A1- 2008 080 829
- US-A1- 2008 264 880
- US-B2- 6 945 616

## Description

### Field of the invention:

The present invention relates to instrument cases, such as those used in the railway industry. More particularly, the present invention relates to a method for providing a new instrument case, an instrument case assembly, and a corresponding kit.

### Background:

Known in the art are instrument cases and various methods and devices for providing, converting or replacing existing, used, or compromised instrument cases.

Instrument cases house instruments and equipment, and protect them from unauthorised access, the elements, etc. In the railway industry, as but one example of an industry in which instrument cases are used, instrument cases are commonly installed on the side of railway tracks or near crossings. They are often installed outdoors, and in locations that are remote or difficult to access. They can be used for operations such as signalling, switching, and track monitoring.

Typically, the instruments and equipment within the instrument case do not need to be replaced or modified, but the instrument case housing these devices requires some change. There can be many reasons for replacing or converting an existing instrument case, or for simply providing a new instrument case. For example, instrument cases, which are usually made of a metal alloy, may succumb to the elements over time and need to be either replaced or converted. Weathered and deteriorated instrument cases can pose safety risks, allow entry of rodents and insects, and expose the housed instruments and equipment to the elements. In another example, it may be desirable to simply provide a new, larger instrument case over an existing one.

Due to variations in the lifetimes of instrument cases and other considerations, not all cases need to be replaced or converted at the same time. This reduces the potential efficiency gains and cost savings which would result from a complete conversion of all instrument cases along a given track or section of track. Furthermore, whether replacing an existing instrument case or providing a new one, railway operators must usually shut down service on the track nearest the instrument case to perform the work required. This shutdown can occur because the operation of the instruments is interrupted when using traditional techniques to replace existing instrument cases. The shutdown may also occur for safety reasons, because the existing instrument cases are often in close proximity to the tracks. These shutdowns can last several days or more.

Consequently, there exists a need to quickly and cost-effectively replace compromised instrument cases, or provide new ones, while not disturbing the equipment and instruments located within them so as to prevent track shutdowns and so as to save on labour costs. Known to the Applicant are the following documents describing potential solutions.

International patent application WO 2011/038493 A1 to Pellin, made public on April 7, 2011, relates to a method for replacing an instrument case having an instrument panel with a new instrument case. This document also describes a new instrument case for replacing an existing case.

US patent No. 5,280,132 issued January 18, 1994 to Clarey et al. describes a plastic enclosure box for an electrical apparatus. The box has a metal cover, as well as removable plates at the base of the box which can include knock-out sections.

Also known to the applicant are foreign patent documents CN 2790106Y and CN 2657334Y.

In light of the aforementioned, there is a need for a method for providing a new instrument case, an instrument case assembly, and a corresponding kit which, by virtue of their design and components, would be able to overcome or at least minimize some of the aforementioned prior art problems.

### Summary:

The object of the present invention is to provide a method, a device, and a kit which by virtue of their steps, design and components, satisfy some of the above-mentioned needs.

According to a first aspect of the invention, there is provided a method for providing a new instrument case for enclosing instruments, the instruments being supported by an instrument support housed within an existing instrument case mounted to a foundation, the method comprising the steps of:
a) providing a temporary support for the instruments and the instrument support;
b) dismounting the existing instrument case from the foundation;
c) fixing at least one of a parallel pair of longitudinal members and a plurality of lateral members to the foundation, the lateral members connecting substantially perpendicularly with the longitudinal members, thereby forming a base;
d) securing the instrument support to at least one of the base and the foundation;
e) removing the temporary support; and
f) installing the new instrument case on the base.

In some optional configurations, the temporary support can be a horizontal reinforcement which is attached at one end to a vertical post, and which connects to the instrument support. This horizontal reinforcement can traverse the instrument support, or pass to its sides. The horizontal reinforcement may also be adjustable vertically along the vertical post.

The objects, advantages and other features of the method will become more apparent upon reading the following non-restrictive description of some of their modes of implementation, given for the purpose of exemplification only, with reference to the accompanying drawings.

### Brief description of the drawings:

Figure 1A is a perspective view of an existing instrument case showing a door and a back panel being removed therefrom, according to a configuration of the present invention; Figure 1B is a perspective view of the existing instrument case of Figure 1A after completion of said removal.
Figure 2A is a perspective view of a new instrument case being installed on a base, according to another configuration of the present invention. Figure 2B is a perspective view of the new instrument case of Figure 2A after completion of said installation.
Figure 3A is a perspective view of a horizontal reinforcement being connected to an instrument support, according to yet another configuration of the present invention; Figure 3B is a perspective view of the reinforcement and the instrument support of Figure 3A after completion of said connection.
Figure 4A is a perspective view of braces being attached to instrument supports, according to yet another configuration of the present invention; Figure 4B is a perspective view of the braces of Figure 4A after completion of said attachment.
Figure 5A is a perspective view of a framework supporting horizontal reinforcements, according to yet another configuration of the present invention; Figure 5B is a perspective view of the framework and reinforcememnts of Figure 5A after completion of said support is secured.
Figures 6A to 6C are perspective views of frameworks attached to horizontal reinforcements and/or instrument supports, according to different configurations of the present invention.
Figure 7A is a perspective view showing longitudinal and lateral members being fixed to a foundation, according to yet another configuration of the present invention; Figure 7B is a perspective view of the members of Figure 7A after completion of said fixing.
Figure 8A is a perspective view showing a floor being assembled from a plurality of removable plates, according to yet another configuration of the present invention; Figure 8B is a perspective view of the floor of Figure 8A after completion of said assembling.
Figure 9A is a perspective view showing the installation of at least part of a new instrument case on a base, according to yet another configuration of the present invention; Figure 9B is a perspective view of the part of the new instrument case of Figure 9A after completion of said installation.
Figure 10A is a perspective view of a reinforcement traversing an instrument support, according to yet another configuration of the present invention; Figure 10B is a close-up perspective view of the reinforcement of Figure 10A where it traverses the instrument support; Figure 10C is a close-up perspective view of the reinforcement of Figure 10A connected to a vertical post.
Figure 11 is a perspective view of a reinforcement being secured to the sides of an instrument support, according to yet another configuration of the present invention.
Figure 12 is a perspective view of a plurality of removable plates forming a floor, according to yet another configuration of the present invention.
Figure 13 is a perspective view of the formed floor of Figure 12.

### Detailed description of optional configurations:

In the following description, the same numerical references refer to similar elements. Furthermore, for sake of simplicity and clarity, namely so as to not unduly burden the figures with several reference numbers, not all figures contain references to all the components and features of the present invention and references to some components and features may be found in only one figure, and components and features of the present invention illustrated in other figures can be easily inferred therefrom. The configurations, geometrical configurations, materials mentioned and/or dimensions shown in the figures are preferred, for exemplification purposes only.

Moreover, although reference is often made herein to instrument cases in the railway industry, the method may be used in other fields and in other applications related to the replacement of an existing instrument case or the provision of a new one where connectivity maintenance of the instruments housed therein is required. For this reason, expressions such as "railway industry", "tracks", "signaling", "switching" etc., as used herein should not be taken as to limit the scope of the present invention to the railway industry in particular.

In addition, although the optional configurations of the method as illustrated in the accompanying drawings include various components, and although these configurations as shown may consist of certain geometrical configurations, not all of these components and geometries are essential and thus should not be taken in their restrictive sense, i.e. should not be taken as to limit the scope of the method. Broadly described, there is provided a method for providing a new instrument case for enclosing instruments, where the instruments are being supported by an instrument support housed within an existing instrument case, which is itself mounted to a foundation. Advantageously, in a significant number of configurations, the method can be carried out without interrupting the operation of the instruments.

The method may help to replace or convert the existing instrument case into the new instrument case. As such, the expression "providing a new instrument case" as used herein can mean removing all or a portion of the existing instrument case and installing the new instrument case in its stead. Therefore, the expression "providing", "converting", "modifying", "adapting", "replacing", and any other equivalent expressions may be used interchangeably herein.

Before describing the various steps of the method, it is useful to provide a brief description of existing and new instrument cases, as well as their various components.

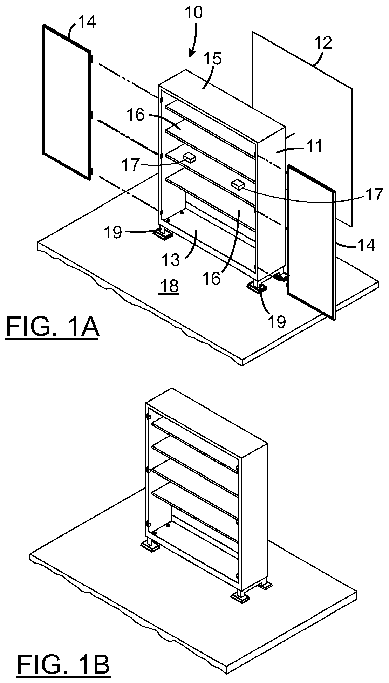

An example of an existing instrument case 10 is illustrated in Figure 1A and 1B. The existing instrument case 10 may have side panels 11, a back panel 12, a floor 13, a door or front panel 14, and a cover 15. The existing instrument case may house at least one instrument support 16. The panels 11,12,14, the door 14, and the cover 15 can be assembled so as to form a casing. The side panels 11 can be contiguous with the back panel 12 and the cover 15. The door 14 may be contiguous with the side panels 11 and the cover 15, and in opposed relation to the back panel 12.

An instrument support 16 is usually housed within the existing instrument case 10. The term "instrument support" as used herein can mean any physical device which maintains the weight or position of instruments 17 disposed thereon, and/or prevents the instruments 17 from being displaced. In some configurations, the instrument support 16 can also supply electrical power or other types of fluid or mechanical connections to the instruments 17. Therefore, the instrument support 16 can be a shelf, a panel, a ledge, a hook, a drawer, a plug, a board, etc., or multiples and combinations thereof.

In Figure 1A, the instrument support 16 is shown as a superposition of shelves attached to the side panels 11, but the instrument support 16 can be attached to other devices such as the foundation 18, for example. The floor 13 can be contiguous to the side panels 11 and in opposed relation to the cover 15. The floor 13 often requires removal and replacement so that a new floor and base matching the dimensions of the new instrument case can be installed, for example. The floor rests on the foundation 18, which is usually a concrete slab in the ground, although it may take other forms. The foundation 18 can have steel angles, anchors 19, or other similar protrusions which project from the foundation 18.

The existing instrument case 10 illustrated in Figure 1A and described above is merely one example of an existing instrument case 10 and the components it may include. Existing instrument cases 10 may have different configurations, sizes or appearances than the one described.

Turning now to new instrument cases, not being part of this invention, since it is understood that new instrument cases may largely resemble the existing instrument case 10, except for the fact that in some instances, the new instrument case is larger than the existing one, and its components may be newer or made of different materials, for example. New instrument cases can have different dimensions than existing cases 10 for many reasons such as: new regulatory requirements, to house more instruments and/or equipment, to conform to modern practices, etc. Both the new and existing instrument cases 10 enclose the instruments 17, which can mean that they simply house them and protect them from the elements, or that they perform the additional function of supporting them as well. The instruments 17 can be any equipment, sensor, computer, signal, or other like device which is supported by the instrument support, which is also enclosed within the existing instrument case 10.

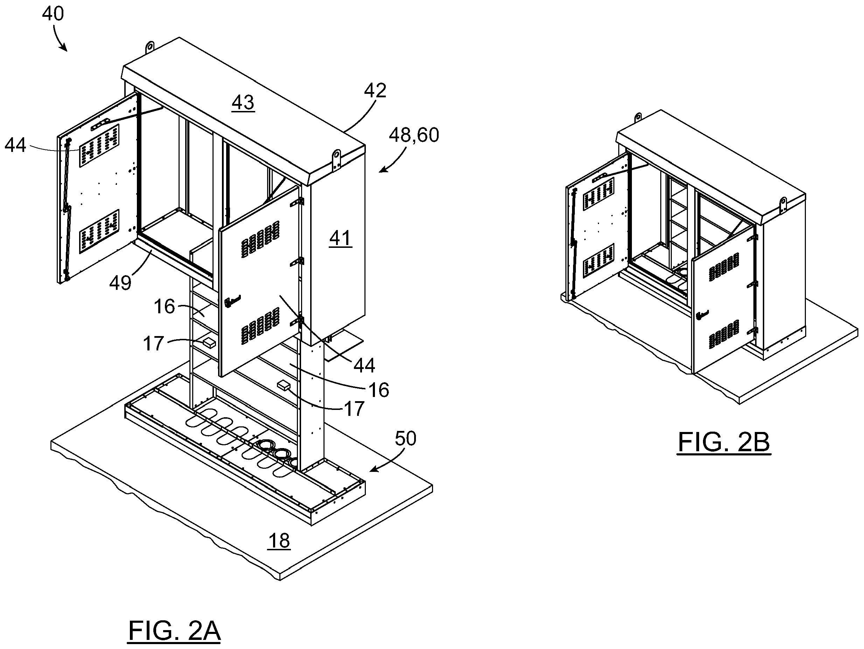

An example of a new instrument case 60 is provided in Figures 2A and 2B. The new instrument case 60 may include a plurality of interconnected walls defining a covering 48. The walls may include a floor wall 49 and may also have at least two side walls 41 which attach to a back wall 42 and a cover wall 43. At least one door 44 can also be provided, which is in opposed relation to the back wall 42 and contiguous to the side walls 41 and the cover wall 43. The door 44 can have a modified latch assembly by using wheels to facilitate their closing. The interconnectivity of these walls 41,42,43,44,49 create a covering 48, which can be a shell or casing for shielding and housing the instrument supports 16 and instruments 17. The walls 41,42,43,44,49 may have different sizes and configurations than the ones shown in Figure 2A, and be made of different materials. Therefore, other configurations and panelling for the covering 48 are possible. The covering 48 houses the instruments 17 on the instrument supports 16 and protects them from the surrounding environment.

It is thus appreciated that the covering 48 can make up the body of the new instrument case 60 and can replace the outer structure of the existing instrument case, or is simply added thereto. Such a new instrument case 60 and corresponding parts can be made of substantially rigid materials, such as metals, alloys, hardened polymers, composite materials, and/or the like, depending on the particular applications for which the new instrument case 60 is intended for and the different parameters in cause (climate, dimensions, etc.).

Having described some of the individual components and features of existing and new instrument cases, the steps of a method for providing a new instrument case according to one embodiment will now be described in more detail.

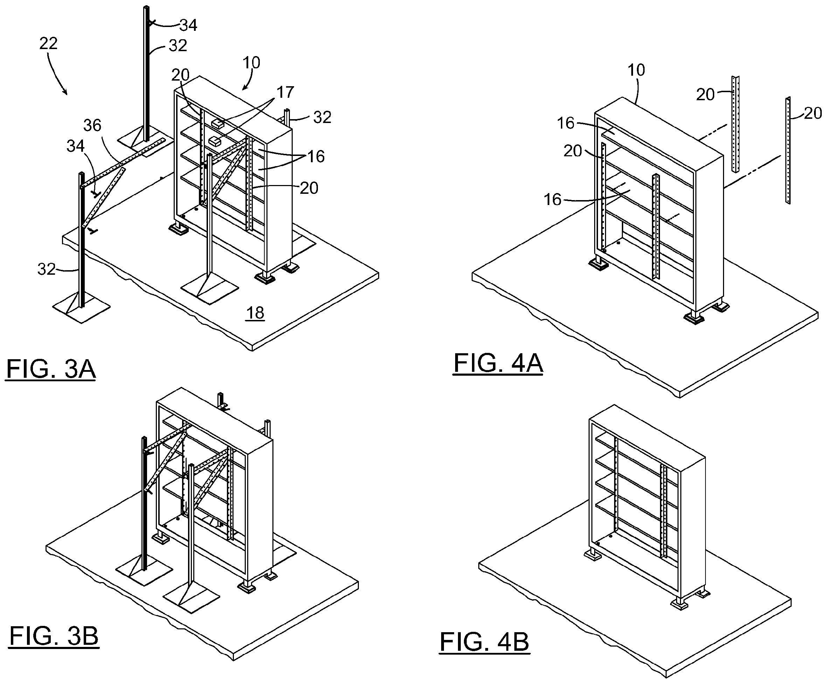

Figures 3A and 3B provide examples of step a) of the method, which relates to providing a temporary support for the instruments 17 and the instrument support 16. Such a temporary support can allow the weight and position of the instruments 17 and the instrument support 16 to be supported independently of the existing instrument case 10 or any other structure. In some optional configurations, the instrument support 16 is secured to the foundation 18, and not to the existing instrument case 10. In such a configuration, the temporary support can prevent the instrument support 16 from toppling over, rather than supporting its weight.

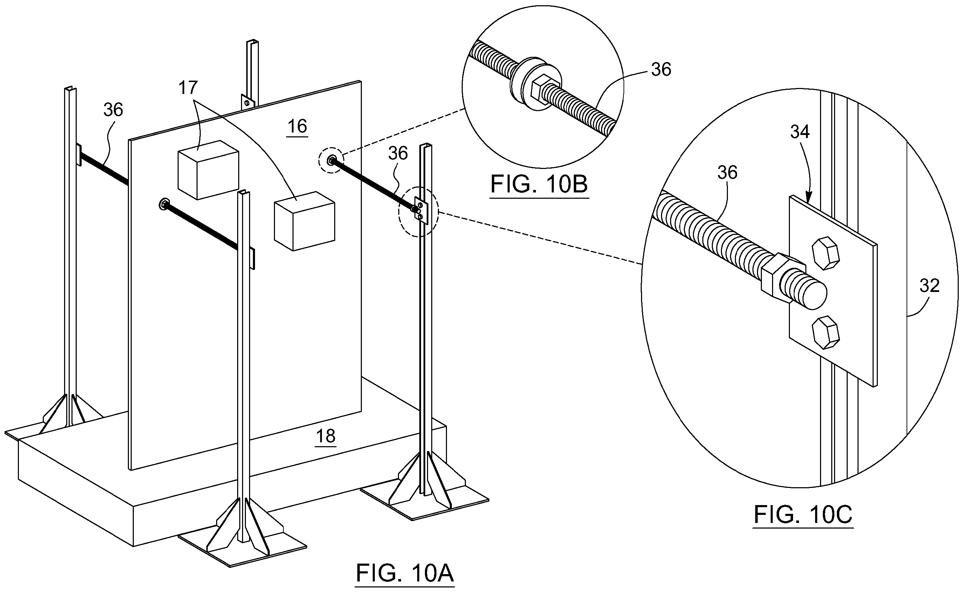

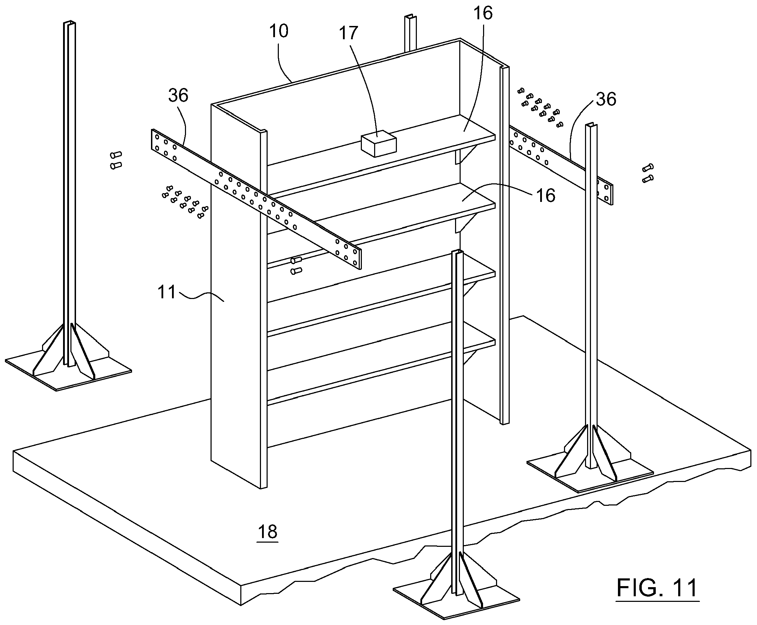

The temporary support can include at least one substantially horizontal reinforcement 36. The horizontal reinforcement 36 can be disposed in a horizontal manner (i.e. parallel to the ground) so as to bear a weight of, or be secured to, the instrument support 16. As such, the reinforcement 36 can be any angled-bar, beam, rod, or other similar device. In one optional configuration, the reinforcement 36 is a threaded rod having a diameter of about 1 inch, as exemplified in Figures 10A to 10C. The reinforcement 36 can be many such horizontal supports, and traverses both the instruments 17 and/or the instrument support 16 and connects to the instrument support 16, thus supporting the weight of the instrument support 16, and thus the instruments 17 themselves. The term "traverse" as used to describe the positioning of the reinforcement 36 can mean that the reinforcement 36 travels through, or extends across, the instruments 17 and instrument support 16. For example, and as illustrated in Figure 10A, the instrument support 16 can be a board or a panel, with the instruments 17 mounted thereon. In such a configuration, the reinforcement 36 can pierce through a passageway made in the instrument support 16 and connect to the instrument support 16 at the passageway. The reinforcement 36 can continue extending on the opposite side of the instrument support 16. In yet another example, and as shown in Figure 11, the reinforcement 36 can be connected to the side of the instrument support 16, and extend on both sides of the instrument support 16. It is thus appreciated that the horizontal reinforcement 36 can have many different configurations provided that it is disposed substantially horizontally and provided that it connects to the instrument support 16 by passing through it, or by passing to one of its sides.

In some optional configurations, and as shown in Figures 4A and 4B, the reinforcement 36 of the temporary support may include a brace 20 which attaches to the instrument supports 16 and allows them to be moved as one structure. In configurations where the instrument supports 16 are shelves, for example, the braces 20 can connect all the shelves together, which allows for one reinforcement to be attached to the braces 20, permitting all the shelves to be secured and supported. The braces 20 can be any known bar, preferably angled or L-shaped. The advantage conferred by angled or L-shaped bars is that they may allow the braces 20 to be securely fashioned to two difference surfaces, such as shelves and a separate framework, for example. The braces 20 are preferably secured both to the front and to the back of the instrument supports 16 of the existing instrument case 10 by any suitable bracket known in the art, such as an L-bracket, coupled with a mechanical fastener. The braces 20 are secured to the instrument supports 16 such that the weight of the braces 20 is supported by the instrument supports 16. Similarly, the braces 20 are secured to the instrument supports 16 such that the braces 20 can support the weight of the instrument supports 16 when they are no longer supported by the existing instrument case 10.

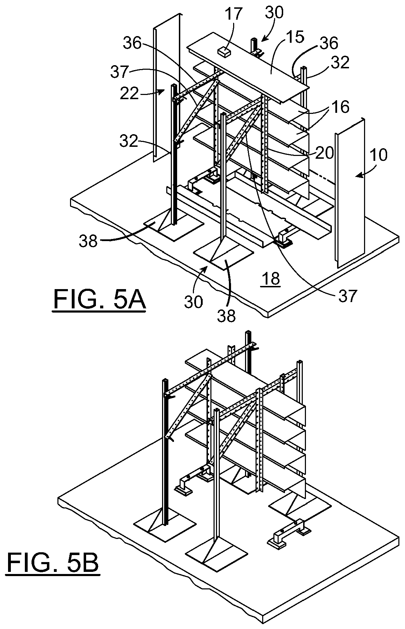

Referring to Figures 5A and 5B, the temporary support can also include a framework 30 which connects to the reinforcement 36 so as to further support the instruments 17 and the instrument support 16. The framework 30 may include at least one foot 38 and a corresponding substantially vertical post 32 mounted thereon and projecting upward therefrom. The foot 38 can be adapted to be positioned on the ground or another surface near the existing instrument case and/or supports 16 so as to provide stability to the post 32. The foot 38 can be a plate, slab, disk, or other similar planar surface. The foot 38 may also be connected to the post 32 by a bracket, such as a triangular bracket, but can also be connected via a weld or by any other mechanical fastener. The post 32 can be made of aluminum unistrut, for example, or from angle posts, square posts, rectangular posts, etc., and from any material such as aluminum, steel, stainless steel, etc.

The at least one reinforcement 36 may be affixed or connected to the framework 30 so as to secure the instruments 17 and the instrument support 16. In some of the illustrated optional configurations, the reinforcement 36 extends substantially horizontally, but in other possible configurations, it may connect with the post 32 at an angle depending on many factors such as the freedom of movement at the site, the configuration of the instrument supports 16, etc. Thus, the connection between the reinforcement 36 and the post 32 can be achieved in many different ways. In one possible configuration, one end of the reinforcement 36 is affixed to the post 32, and an opposite end of the reinforcement 36 is affixed to another post 32 on an opposite side of the instrument support 16. In another possible configuration, the reinforcement 36 is connected at both its ends to separate posts 32, and it is further connected to the instrument support 16 at the point at which it traverses the instrument support 16, as exemplified in Figure 10A and 10B. The point at which the reinforcement 36 traverses the instrument support 16 can be at various positions, such as to the side of the instrument support 16, for example. The reinforcement 36 can also be adjusted vertically along the post 32 to which it is connected, thus allowing the reinforcement 36 to connect to the post 32 at multiple vertical intervals.

The temporary support can also be height adjustable. The height of the reinforcement 36 may be adjusted vertically along the post 32 by using a tightener or adjusters 34, an example of which is shown in Figure 3A. These adjusters 34 can modify the vertical position at which the reinforcement 36 is attached to the post 32. The adjusters 34 can also assist in supporting the weight of the reinforcement 36, and to securely connect the reinforcement 36 to the post 32. Examples of adjusters 34 known in the art include locking pins and shelf clips, but other types of adjusters may be used as well. In one optional configuration, the adjusters 34 slide along a U-channel of the post 32 and can be fixed at a desired height. In another optional configuration, and as shown in 10C, the adjusters 34 consist of carriage bolts with nuts and washers. The nuts can be loosened to lower or raise the threaded rod reinforcement 36 up or down along the vertical post 32. Once at the appropriate height, the nuts can be tightened around the carriage bolts so as to fix them against the channel in the post 32, thereby fixing the height of the reinforcement 36. Optionally, the post 32 and the adjusters 34 interact to allow vertical adjustments with sensitivities of about 1/1000^{th} of an inch.

The temporary support may also include a corner stabilizer 37, which can be provided to further solidify the reinforcement 36 and its connection to the post 32. In Figure 5A, the corner stabilizer 37 is shown as a bar 37, such as an angle or L-shaped bar, having one extremity affixed to the post 32 and another affixed under the reinforcement 36. In the case where the position of the reinforcement 36 along the post 32 is adjustable, the position of the corner stabilizer 37 may also be adjustable.

It is apparent that a different configuration for the temporary support and/or framework 30 is possible for supporting the reinforcements 36 and/or instrument supports 16, and that the configuration and form of the temporary support illustrated in the accompanying figures should not be interpreted as limiting the scope of the kit to said configuration or form.

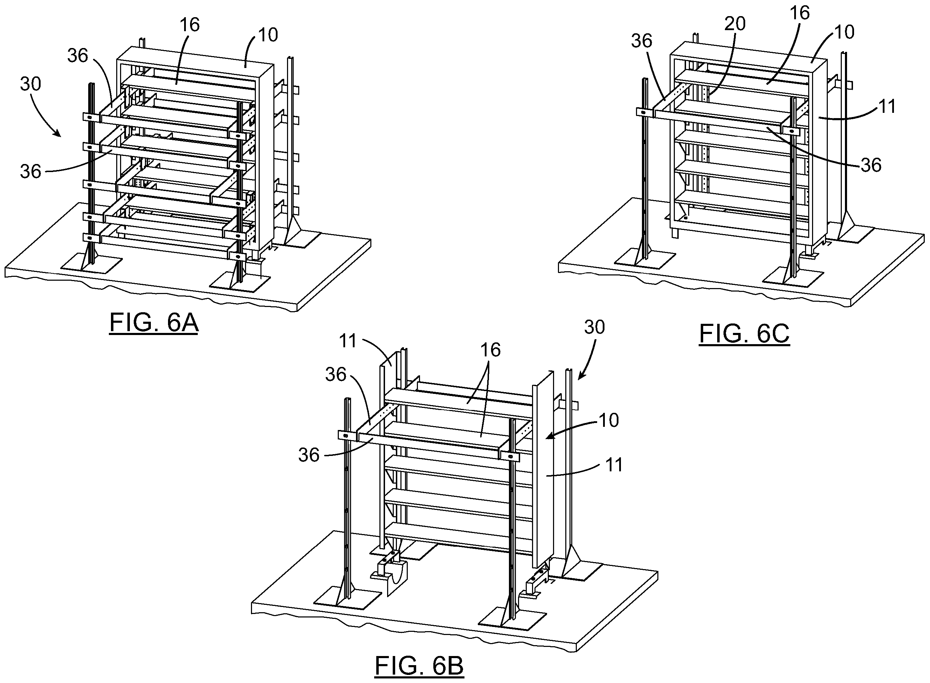

Indeed, Figures 6A to 6C show non-limiting examples of alternate configurations and forms for temporary supports. In each of these variants, a pair of frameworks 30 is provided respectively in front and in the back of the existing instrument case 10, each pair being joined together by a reinforcement 36. Some reinforcements 36 have opposite extremities affixed to the front and back posts 32. In Figure 6A, each instrument support 16 is supported by a pair of reinforcements 36. In Figure 6B, two reinforcements 36 coupled with two other reinforcements 36 are sufficient to support the weight of instrument supports 16 held together by the side panels 11 of the existing instrument case 10. Figure 6C shows braces 20 secured only to the back of the instrument supports 16, wherein the reinforcements 36 are attached to the braces 20, and separate reinforcements 36 connects different frameworks 30. Thus, it is apparent that numerous possible configurations of framework/reinforcement/instrument support/brace are possible depending on multiple parameters such as, but not limited to, weight of the instrument supports, freedom of movement on site, components available on site, etc. Other configurations partially or entirely based on different structural components can also be considered.

Optionally, and as shown in Figures 1A and 1B, step a) of the method may be preceded by exposing the instrument support 16 and instruments 17 by removing one or more of the panels of the existing instrument case 10. This panel can for example be the door 14, the back panel 12, or both. The door 14 or back panel 12 can be removed by any conventional technique such as, but not limited to, cutting, shearing, tearing, pulling etc. Once removed, the instrument supports 16 are exposed so that they can receive the temporary support. Further optionally, and as shown in Figures 3A and 3B, step a) can include traversing the instruments 17 and the instrument support 16 with at least one substantially horizontal reinforcement 36, to which the instrument support 16 is connected.

Figure 11 provides an example of step b) of the method, which relates to dismounting the existing instrument case 10 from the foundation 18. The term "dismounting" can mean that the existing instrument case 10 is removed or separated from the foundation 18. In some optional configurations, such as where the replacement of the existing instrument case 10 is required, the dismounted case is discarded so as to be replaced with the new instrument case. In such a configuration, the components of the existing instrument case 10 are removed. Thus, the existing side panels, existing cover, and the existing floor are removed by any of the above-described techniques used to remove the back panel or the door. This results in the instruments 17 and the instrument support 16 being wholly supported by the temporary support.

In other configurations, it is desirous to keep the existing instrument case 10, and thus the existing instrument case 10 can be suspended or held above the foundation 18 by the temporary support while a base is being formed, as described below, and such an existing instrument case 10 can then be lowered on the foundation 18, and attached thereto.

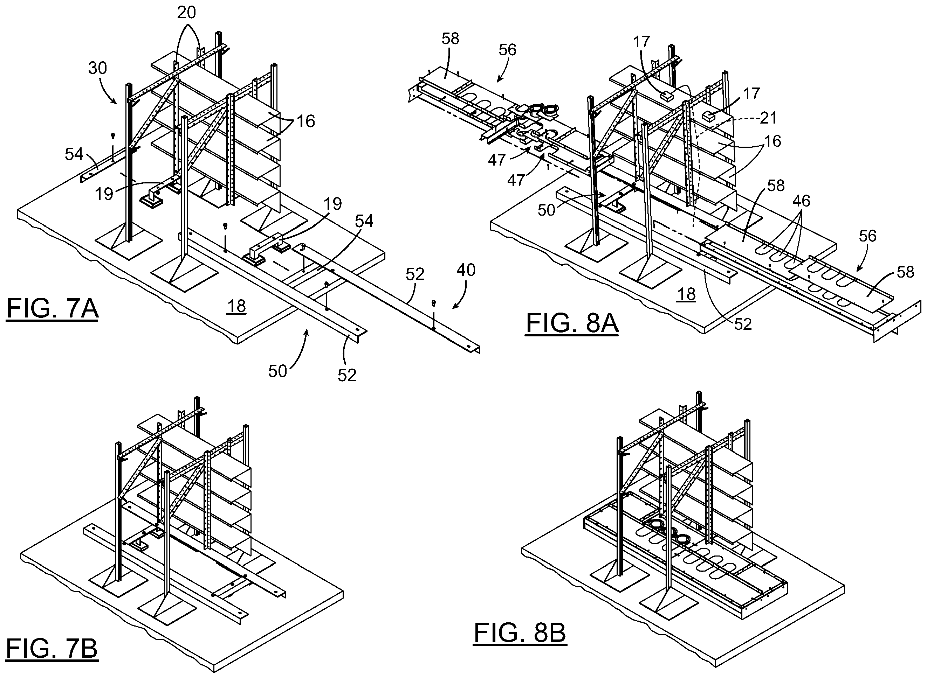

Figures 7A and 7B provide examples of step c) of the method, which relates to fixing at least one of a parallel pair of longitudinal members 52 and a plurality of lateral members 54 to the foundation 18. The lateral members 54 connect substantially perpendicularly with the longitudinal members 52, thus forming a base 50. The base 50 thus formed can have a larger imprint or base perimeter than the floor of the existing instrument case. This allows a new instrument case, which is larger than the existing instrument case, to be used on the same foundation 18 that supported the existing instrument case.

The base 50 is secured to the foundation 18, either directly or indirectly, so as to provide a bottom upon which the new instrument case can be installed. The base 50 can thus be any framework or floor structure which provides such functionality. The terms "longitudinal" and "lateral" as used to described the members 52,54 of the base can mean the length and width, respectively, of the base 50. The pair of longitudinal members 52 may be fixed along the base 50 so as to define the length of the new instrument case. Of course, the number of longitudinal members 52 is not limited to a single pair or multiple pairs, and can include a single longitudinal member 52 or odd numbers of same, as required. The lateral members 54 may also be fixed to the foundation 18 so as to define the width of the new instrument case. Any number of lateral members 54 can be used to form the base 50, said number often being determined based on site requirements and new instrument case dimensions, to name but a few factors. Either of the longitudinal or lateral members 52,54 may be fixed to anchors 19 projecting from the foundation 18, instead of being fixed to the foundation 18 directly. This permits the new instrument case to be supported at an elevation from the foundation 18, as may be sometimes required. This also allows the base 50 thereby formed to accommodate a new instrument case of any dimension.

An example of the formation of the base 50 is now described. The lateral members 54 can be placed over the foundation 18 or the anchors 19 projecting therefrom and secured thereto so as to adapt or "widen" the foundation 18 to conform to the lateral dimensions of the new instrument case. Then longitudinal members 52 can be placed and secured so as to "lengthen" the foundation 18 to conform to the longitudinal dimensions of the new case 40. The members 52,54 can be connected to each other perpendicularly, thus defining the base 50. The members 52,54 can connect to each other at any point along their respective lengths. Once the base 50 is so formed, the new instrument case is mounted thereon. The members 52,54 are shown as angled or "L" bars, but can be any suitable device or apparatus. Thus, it is now apparent that the laying of the base 50 prepares the foundation 18 to support the new instrument case 40. Of course, the order of placing longitudinal and lateral members 52,54 can be changed as well as their form and dimensions, depending on the configurations of the foundation 18, the dimensions of the new instrument case, the restrictions and limitations of the work site, and other such factors.

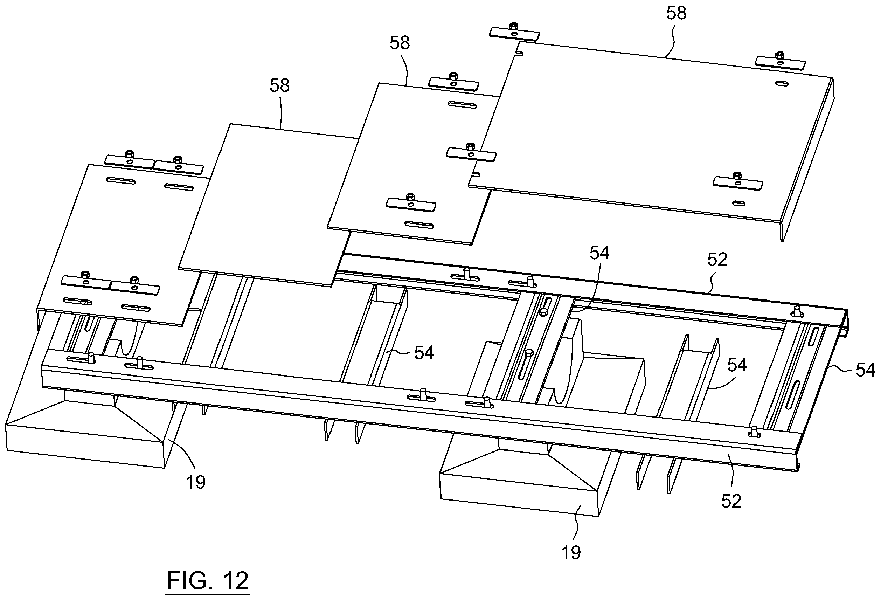

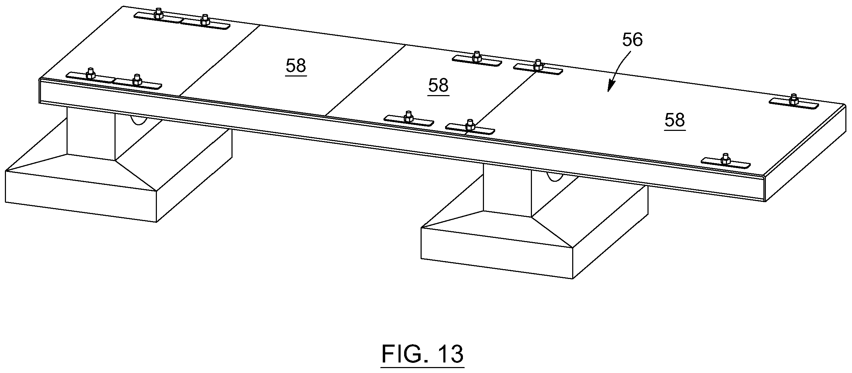

Referring to Figures 8A and 8B, the base 50 may also include a floor 56 which is assembled from a plurality of removable plates 58. The floor 56 can protect the interior of the new instrument case from the ground and anything that may ingress therefrom. Prior to a new floor 56 being assembled, the method may involve removing the floor of the existing instrument case so as to replace it with the new floor 56 and/or base 50. Once the base 50 has been installed, the plates 58 can be laid atop or attached to the base 50. The plates 58 are designed, shaped, and configured to support the new instrument case 40. As shown in Figures 12 and 13, the plates 58 can consist of four plates 58, for example, of varying or the same dimensions, which can be mounted to the longitudinal or lateral members 52,54. When so mounted, the plates 58 can form a continuous surface which serves as the floor 56. The plates can be any planar sheet made of metal or another corrosion-resistant material.

Returning to Figure 8A and 8B, wiring 21 and other connections can run from the instruments 17, through the foundation 18, and on towards whatever device to which they are connected. While replacing the existing instrument case or providing a new one, it is often desirous to maintain the connectivity of the wiring 21 so as to permit the instruments 17 to continue their operations. One possible technique for accomplishing this is to provide access in the floor 56 for the wiring 21 to go through. Therefore, the plates 58 can include at least one floor aperture 47. The floor aperture 47 can be achieved through knock-outs 46 in the plates 58, which can be knocked or punched out so as to create the floor apertures 47 by workers on site. Knock-outs 46 are understood in the art to be loosely-attached or half-cut portions in the plates 58 which are easily removed by using simple tools or by the workers own hands. Alternatively, the floor aperture 47 can be created by simply piercing or cutting a hole in one or more plates 58, advantageously allowing the floor aperture 47 to accommodate any site restrictions which may prevent the efficient use of knock-outs 46.

Figure 10A provides an example of step d) of the method, which relates to securing the instrument support 16 to at least one of the base and the foundation 18. This step may occur after the new base and floor have been formed so that the instrument support 16 can be mounted thereon. In some optional configurations where the instrument support 16 consists of shelves, the shelves may be mounted directly to the side panels of the existing instrument case. In such a configuration, it may be desirous to maintain this mounting of the shelves, and the instrument support 16 and the side panels will therefore be secured directly to the base. In an alternative configuration, the instrument support 16 can consist of a vertical board or panel, which is secured to the foundation 18. In such a configuration, it may be desirous to maintain this connection with the foundation 18 even after the base 50 has been formed. In yet another alternative configuration, the instrument support 16 can be secured to the walls or other area of the new instrument case.

Figures 2A and 2B provide an example of step e) of the method, which relates to removing the temporary support. This step can be performed once the instrument support 16 has been secured to either the base 50 or the foundation 18, or both. Once the instrument support 16 is thus secured, there may be little need for the reinforcements and frameworks that can make up the temporary support. Thus, the temporary support can be withdrawn and set aside. Furthermore, this step can be performed either before or after the new instrument case is installed on the base.

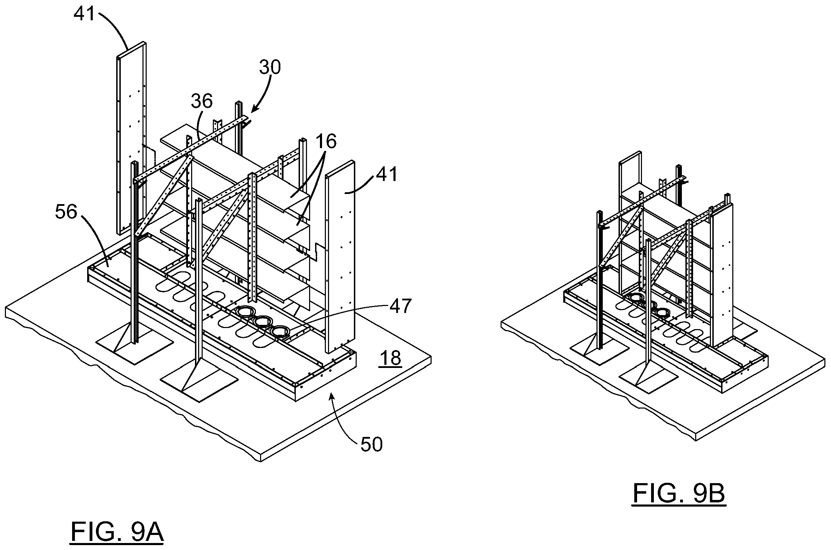

Finally, Figures 2A and 2B provide examples of step f) of the method, which relates to installing the new instrument case 60 on the base 50. An example of how the new instrument case 60 can be installed is now described with reference to Figures 9A and 9B. Once the floor 56 is in place, new side walls 41 can be connected to the instrument supports 16 and to the floor 56. The instrument supports 16 therefore no longer require the framework 30 or the reinforcements 36 to support their weight. Finally, the new instrument case 60 is placed onto the base 50 secured to the foundation 18 and secured thereto. The frameworks 30 and/or reinforcements 36 can either be removed before or after the new instrument case is installed onto the base 50. Thus it is now apparent how the existing instrument case 10 is converted into a potentially differently dimensioned new instrument case 40 in a quick and cost-efficient manner.

Optionally, and prior to installing the new instrument case 60, the floor 56 can be created by connecting together a plurality of removable plates 58 to the base 50. These plates 58 can then be pierced or punctured so as to create a floor aperture 47, thereby allowing wiring 21 from the instruments 17 to pass through the floor 56.

Optionally, step f) may include fixing one of the lateral members 54 to each of a plurality of anchors 19 projecting from the foundation 18, as shown in Figure 12. Additional lateral members 54 can be joined to the pair of longitudinal members 52 at various intervals along the longitudinal members 52 so as to reinforce the rigidity of the base 50, for example.

The assembly 40 may facilitate the task of replacing an existing instrument case, or may simply provide a new instrument case for mounting to the foundation 18. The assembly 40 includes multiple interconnected walls which define the covering 48, which is the body of the new instrument case 60 described above. Referring to Figures 7A and 7B, the assembly 40 also includes a parallel pair of longitudinal members 52 and a plurality of lateral members 54, such as the ones described above. At least one of the longitudinal and lateral members 52,54 is fixed to the foundation 18. The lateral members 54 connect substantially perpendicularly with the longitudinal members 52, thereby forming the base 50. Once the base is so formed, the covering 48 can be mounted thereon. A kit can be used, for example, to temporarily hold in place the instrument support, as described above, and thus the instruments supported thereby, while an existing instrument case is being removed from a foundation and a new instrument case is being installed thereon, so as to provide a new enclosure for the instrument support and the instruments. Referring to Figures 3A, 3B, 5A, and 5b, the kit 22 includes at least one substantially horizontal reinforcement 36, which can traverse the instruments 17 and the instrument support 16. The reinforcement 36 can connect to the instrument support 16 so as to be secured thereto. The kit 22 also includes a framework 30, which consists of at least one substantially vertical post 32. The reinforcement 36 can be fixed to the post 32 so as to remain in a fixed position. Since the instrument support 16 is secured to the reinforcement 36, and since the reinforcement is itself secured to the post 32, the post 32 can therefore secure and support the instruments 17 and the instrument support 16.

It may thus now be appreciated that the present method for providing a new instrument case can provide some improvements to current techniques for dealing with instrument cases. As but one example, configurations of the present method may allow work crews to cut about 40% off installation times for new instrument cases, from roughly 6 hours to roughly 4 hours per conversion, because the frameworks are not needed once the instrument supports are re-attached to the side panels. Labour times can be even further reduced because the covering of the new instrument case 40 can be pre-assembled before being transported to the work site, thus saving about 90% more time in the field. Furthermore, the optional step of traversing the reinforcement through the instrument support facilitates the task of supporting the instrument support from both of its sides, further reducing labour costs. The presence of knock-outs or the piercing of the plates can also be advantageous, since they allow a work crew member to easily and conveniently create apertures in the floor without the need of cumbersome cutting or shearing tools. In some known devices, all apertures were already open, thus these features can allow for the opening of apertures only where needed, which further saves time, and maintains continuity in the floor when required.

Furthermore advantageously, the instruments and/or equipment on the instrument supports, as well as their mechanical and electrical connections, are not disturbed or disconnected by the replacement of the existing instrument case or the provision of a new one. The framework/reinforcement combination allows crews to perform the required work without having to disconnect or move instruments and/or equipment. This is even more advantageous because it allows the railway track to remain in service during work.

The instrument case assembly may also be advantageous because the base allows the new instrument case to be installed on most sites and most existing railroad foundations around the world, and is not limited to a particular configuration and/or dimension of the existing foundation. Furthermore, the new instrument case can be made of any width, for example up to 104" or depth of 54". The use of vertical adjusters allows for vertical adjustment of the reinforcements with increased sensitivity.

Thus, the above-described method may allow for the rapid and efficient replacement or conversion of existing instrument cases, and provision of a new instrument case, while maintaining the connectivity and functionality of the instruments and equipment housed therein. In the railway industry in particular, for example, they may also allow the railway track to remain operational during such work.

Of course, numerous modifications could be made to the above-described configurations without departing from the scope of the invention, as defined in the appended claims.

## Claims

1. A method for providing a new instrument case (40,60) for enclosing instruments in the railway industry, the instruments being supported by an instrument support (16) housed within an existing instrument case (10) mounted to a foundation (18), the method comprising the steps of:
a) providing a temporary support (30) for the instruments and the instrument support (16);
b) dismounting the existing instrument case (10) from the foundation;
c) fixing at least one parallel pair of longitudinal members (52) and a plurality of lateral members (54) to the foundation, the lateral members connecting substantially perpendicularly with the longitudinal members, thereby forming a base, (50) and connecting a plurality of removable plates (58) to the base, thereby forming a floor;
d) securing the instrument support (16) to at least one of the base (50) and the foundation (18);
e) removing the temporary support; (30) and
f) installing the new instrument case (40,60) on the base (50).

2. A method according to claim 1, wherein step a) comprises traversing the instruments and the instrument support with at least one substantially horizontal reinforcement and connecting the instrument support thereto, the at least one reinforcement defining two ends, step a) further comprising connecting each end to a corresponding substantially vertical post, each post disposed on opposed sides of the instrument support.

3. A method according to claim 2, wherein traversing the instruments and the instrument support comprises creating a passageway through the instrument support and inserting the at least one reinforcement therethrough.

4. A method according to claim 2, wherein traversing the instruments and the instrument support comprises mounting a pair of reinforcements to sides of the instrument support.

5. A method according to any one of claims 2 to 4 comprising adjusting the at least one reinforcement vertically along each post, thereby permitting the at least one reinforcement to connect to each post at multiple vertical intervals.

6. A method according to any one of claims 1 to 5, wherein step b) comprises holding the existing instrument case suspended in place above the foundation during formation of the base, using said temporary support.

7. A method according to any one of claims 1 to 6, wherein the formed base defines a base perimeter larger than a floor perimeter of the existing instrument case.

8. A method according to any one of claims 1 to 7, wherein step b) comprises removing a floor of the existing instrument case.

9. A method according to any one of claims 1 to 8, comprising piercing at least one of the plates so as to create a floor aperture.

10. A method according to any one of claims 1 to 9, wherein step f) comprises fixing one of the lateral members to each of a plurality of anchors projecting from the foundation, step f) further comprising joining additional lateral members to the pair of longitudinal members.

## Patentansprüche

1. Verfahren zur Bereitstellung eines neuen Instrumentenkastens (40, 60) zur Aufbewahrung von Instrumenten in der Eisenbahnindustrie, wobei die Instrumente von einer Instrumentenstütze (16) gestützt werden, die in einem bestehenden, auf einem Fundament (18) montierten Instrumentenkasten (10) untergebracht ist, wobei das Verfahren die folgenden Schritte umfasst:
a) Bereitstellen einer vorübergehenden Stütze (30) für die Instrumente und die Instrumentenstütze (16),
b) Abmontieren des bestehenden Instrumentenkastens (10) vom Fundament,
c) Befestigen mindestens eines parallelen Paars Längsglieder (52) und einer Vielzahl von seitlichen Gliedern (54) am Fundament, wobei die seitlichen Glieder im Wesentlichen senkrecht mit den Längsgliedern verbunden sind, wodurch eine Basis (50) gebildet wird, und eine Vielzahl von entfernbaren Platten (58) mit der Basis verbinden, wodurch ein Boden gebildet wird,
d) Befestigen der Instrumentenstütze (16) an der Basis (50) und/oder dem Fundament (18),
e) Entfernen der vorübergehenden Stütze (30) und
f) Installieren des neuen Instrumentenkastens (40, 60) auf der Basis (50).

2. Verfahren nach Anspruch 1, wobei Schritt a) das Durchqueren der Instrumente und der Instrumentenstütze mit mindestens einer im Wesentlichen horizontalen Verstärkung und das Verbinden der Instrumentenstütze daran umfasst, wobei die mindestens eine Verstärkung zwei Enden definiert, wobei Schritt a) ferner das Verbinden jedes Endes mit einem entsprechenden im Wesentlichen vertikalen Pfosten umfasst, wobei jeder Pfosten an gegenüberliegenden Seiten der Instrumentenstütze angeordnet ist.

3. Verfahren nach Anspruch 2, wobei das Durchqueren der Instrumente und der Instrumentenstütze das Schaffen eines Durchgangs durch die Instrumentenstütze und das Einführen der mindestens einen Verstärkung dort hindurch umfasst.

4. Verfahren nach Anspruch 2, wobei das Durchqueren der Instrumente und der Instrumentenstütze das Montieren eines Paars Verstärkungen an Seiten der Instrumentenstütze umfasst.

5. Verfahren nach einem der Ansprüche 2 bis 4, umfassend das vertikale Verstellen der mindestens einen Verstärkung entlang jedes Pfostens, wodurch die mindestens eine Verstärkung in mehreren vertikalen Abständen mit jedem Pfosten verbunden werden kann.

6. Verfahren nach einem der Ansprüche 1 bis 5, wobei Schritt b) das Hängenlassen des bestehenden Instrumentenkastens über dem Fundament während der Ausbildung der Basis unter Einsatz der vorübergehenden Stütze.

7. Verfahren nach einem der Ansprüche 1 bis 6, wobei die ausgebildete Basis einen Basisumfang definiert, der größer als ein Bodenumfang des bestehenden Instrumentenkastens ist.

8. Verfahren nach einem der Ansprüche 1 bis 7, wobei Schritt b) das Entfernen eines Bodens des bestehenden Instrumentenkastens umfasst.

9. Verfahren nach einem der Ansprüche 1 bis 8, umfassend das Durchbrechen mindestens einer der Platten, um eine Bodenöffnung zu schaffen.

10. Verfahren nach einem der Ansprüche 1 bis 9, wobei Schritt f) das Befestigen eines der seitlichen Glieder an jedem einer Vielzahl von Ankern, die von dem Fundament vorragen, umfasst, wobei Schritt f) ferner das Verbinden zusätzlicher seitlicher Glieder mit dem Paar Längsglieder umfasst.

## Revendications

1. Procédé pour la fourniture d'une nouvelle armoire d'instrumentation (40-60) pour loger des instruments dans l'industrie ferroviaire, les instruments étant maintenus par un support d'instrument (16) logé à l'intérieur d'une armoire d'instrumentation (10) existante fixée à une fondation (18), le procédé comprenant les étapes consistant à :
a) fournir un support temporaire (30) pour les instruments et le support d'instrument (16) ;
b) démonter l'armoire d'instrumentation (10) existante par rapport à la fondation ;
c) fixer au moins une paire parallèle d'éléments longitudinaux (52) et une pluralité d'éléments latéraux (54) à la fondation, les éléments latéraux étant reliés sensiblement perpendiculairement aux éléments longitudinaux, formant ainsi une base (50) et reliant une pluralité de plaques amovibles (58) à la base, formant ainsi un plancher ;
d) fixer le support d'instrument (16) à au moins un élément parmi la base (50) et la fondation (18) ;
e) retirer le support temporaire (30) ; et
f) installer la nouvelle armoire d'instrumentation (40, 60) sur la base (50) .

2. Procédé selon la revendication 1, dans lequel l'étape a) comprend le fait de traverser les instruments et le support d'instrument avec au moins un renforcement pour l'essentiel horizontal et d'y connecter le support d'instrument, l'au moins un renforcement définissant deux extrémités, l'étape a) comprenant en outre la connexion de chaque extrémité à un poteau vertical lui correspondant sensiblement, chaque poteau étant disposé sur les côtés opposés du support d'instrument.

3. Procédé selon la revendication 2, dans lequel le fait de traverser les instruments et le support d'instrument comprend la création d'un passage à travers le support d'instrument et l'insertion de l'au moins un renforcement à travers.

4. Procédé selon la revendication 2, dans lequel le fait de traverser les instruments et le support d'instrument comprend la fixation d'une paire de renforcements aux côtés du support d'instrument.

5. Procédé selon l'une quelconque des revendications 2 à 4 comprenant le réglage de l'au moins un renforcement verticalement le long de chaque poteau, permettant ainsi à l'au moins un renforcement de se connecter à chaque poteau à de multiples intervalles verticaux.

6. Procédé selon l'une quelconque des revendications 1 à 5, dans lequel l'étape b) comprend le maintien de l'armoire d'instrumentation existante suspendue en place au-dessus de la fondation pendant la formation de la base, à l'aide dudit support temporaire.

7. Procédé selon l'une quelconque des revendications 1 à 6, dans lequel la base formée définit un périmètre de base plus large qu'un périmètre de plancher de l'armoire d'instrumentation existante.

8. Procédé selon l'une quelconque des revendications 1 à 7, dans lequel l'étape b) comprend le retrait d'un plancher de l'armoire d'instrumentation existante.

9. Procédé selon l'une quelconque des revendications 1 à 8, comprenant le perçage d'au moins une des plaques de façon à créer une ouverture de plancher.

10. Procédé selon l'une quelconque des revendications 1 à 9, dans lequel l'étape f) comprend la fixation d'un des éléments latéraux à chaque ancre parmi une pluralité d'ancres saillant par rapport à la fondation, l'étape f) comprenant en outre le fait de joindre des éléments latéraux supplémentaires à la paire d'éléments longitudinaux.
